# EUROPEAN PATENT SPECIFICATION

(11) **EP 4 560 793 B1**
(45) Date of publication and mention of the grant of the patent: **02.09.2026**
(21) Application number: 23898401.7
(22) Date of filing: 01.12.2023
(51) Int. Cl.: H01M 10/658, H01M 50/291, H01M 50/211, H01M 50/258, H01M 50/207, H01M 50/244, H01M 50/293, H01M 50/502

(54) **CELL ASSEMBLY AND BATTERY PACK INCLUDING THE SAME**
ZELLENANORDNUNG UND BATTERIEPACK DAMIT
ENSEMBLE CELLULE ET BLOC-BATTERIE LE COMPORTANT

(30) Priority: 02.12.2022 KR 20220167127; 17.03.2023 KR 20230035457
(43) Date of publication of application: 28.05.2025
(73) Proprietor: LG Energy Solution, Ltd., Seoul 07335 (KR)
(72) Inventor: KIM, Min Bum, Daejeon 34122 (KR); JEON, Jong Pil, Daejeon 34122 (KR); SHIN, Ju Hwan, Daejeon 34122 (KR); SEONG, Jun Yeob, Daejeon 34122 (KR); LEE, Hyoung Suk, Daejeon 34122 (KR)
(74) Representative: Plasseraud IP
(86) International application number: PCT/KR2023/019735
(87) International publication number: WO 2024/117878

(56) References cited:
- WO-A1-2021/256878
- KR-A- 20120 137 698
- KR-A- 20190 000 210
- KR-A- 20210 108 442
- KR-A- 20220 036 171
- KR-A- 20220 065 548

## Description

### [Technical Field]

The present invention relates to a cell assembly and a battery pack including the same. More specifically, the invention provides a cell assembly including a side beam coated with an insulating material at the lower end, and provides a battery pack utilizing the side beam of the cell assembly to inhibit the movement of heat in an internal space.

This application claims the benefit of priority from Korean Patent Application No. 10-2022-0167127, filed on December 2, 2022, Korean Patent Application No. 10-2023-0035457, filed on March 17, 2023, and Korean Patent Application No. 10-2023-0172124, filed on December 1, 2023.

### [Background Technology of the Invention]

Types of secondary batteries include lithium-ion batteries, lithium polymer batteries, nickel-cadmium batteries, nickel-hydrogen batteries, and nickel-zinc batteries. The operating voltage of these unit secondary battery cells, i.e., unit battery cells, is approximately 2.5 V to 4.2 V. Therefore, if a higher output voltage is required, a plurality of battery cells is connected in series to form a battery pack. Also, depending on the charge/discharge capacity required for the battery pack, a plurality of battery cells may be connected in parallel to form a battery pack. Accordingly, the number of battery cells included in the battery pack may be varied depending on the required output voltage or charge/discharge capacity.

For example, when configuring a battery pack by connecting a plurality of battery cells in series/parallel, a battery module made of a plurality of battery cells is configured first.

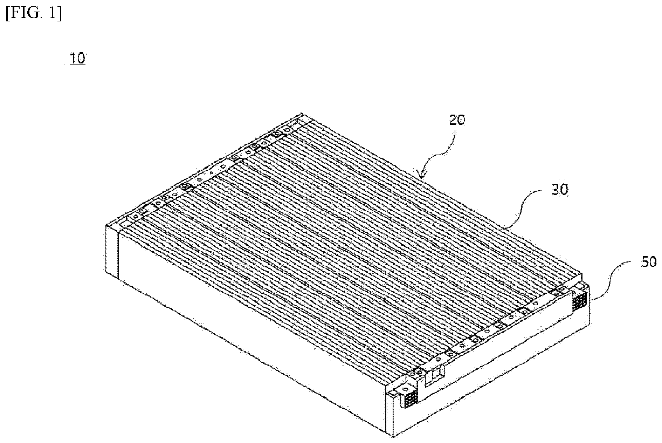

FIG. 1 illustrates one example of a conventional battery module, and is a perspective view of a cell assembly 10 having a pouch-shaped cell 30 exposed to the outside. Specifically, the cell assembly 10 shown in FIG. 1 is coupled to a busbar frame 50 having electrode leads drawn out from both sides and covering the electrode leads in front of and behind a plurality of cells 30 stacked unidirectionally.

The form as shown in FIG. 1 has the advantage of being lighter in weight compared to conventional battery modules that enclose that seal the cells 30 with a structure in which the module frame that encloses and protects the cells 30 inside is omitted.

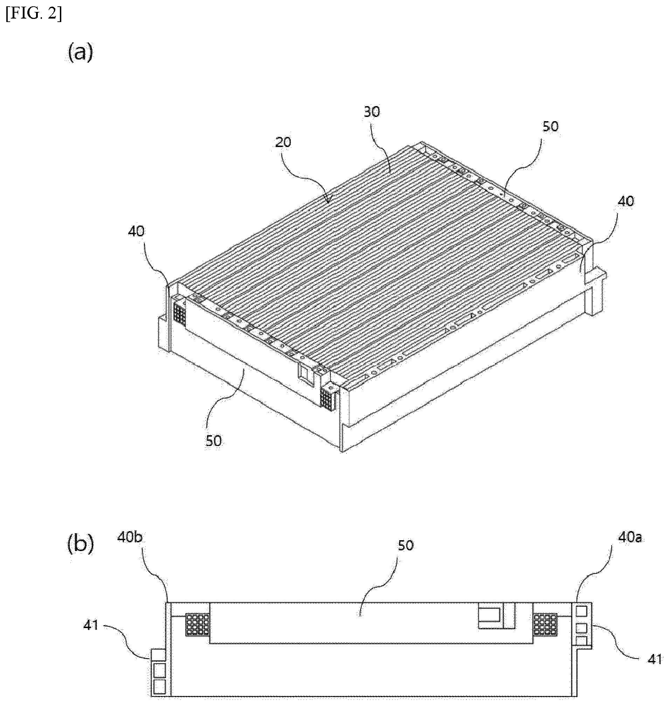

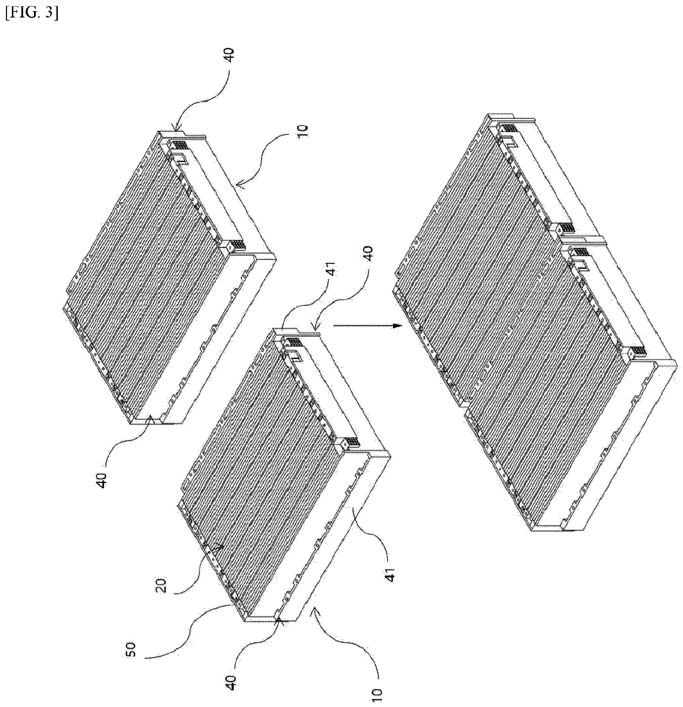

FIG. 2 is a perspective and front view of a conventional cell assembly 10 with side beams 40 coupled to both sides to support the sides of the cell block 20, and FIG. 3 illustrates the shape of the side beam 40 coupled to both sides in FIG. 2.

The cell assembly 10 of FIG. 2(a) is characterized in that side beams 40 are applied to improve the side support of the cell assembly 10. The pair of side beams 40 are formed with protrusion part 41 at their upper and lower parts, respectively, as shown in FIG. 2(b), wherein the protrusion part 41 is formed with steps to have an interlocking shape.
When the cell assembly 10 having side beams as described above are housed in the battery pack, the side beams provided on the side parts of each cell assembly 10 are engaged and coupled with each other.

FIG. 3 illustrates a pair of cell assemblies 10 that are housed in the internal space of a pack case 60 that is included in a battery pack. The pair of cell assemblies 10 disposed adjacent to each other as shown in FIG. 3 are engaged and coupled with each other by side beams 40 provided at a side part of each cell assembly 10.

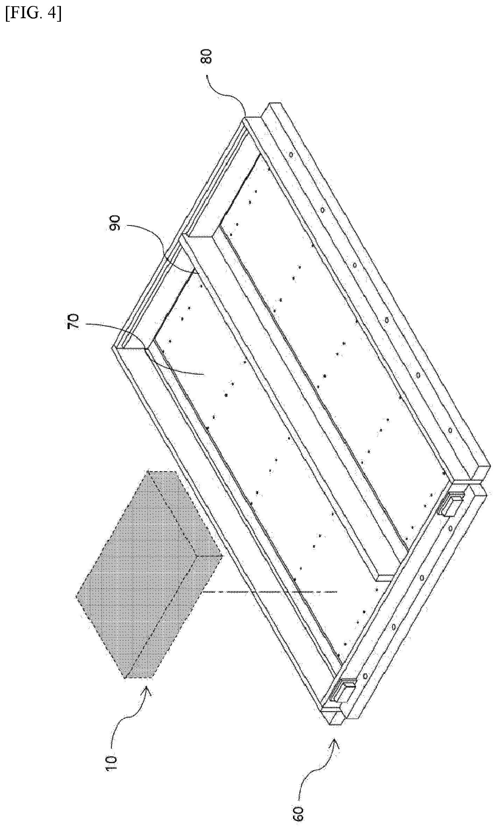

FIG. 4 illustrates a pack case 60 in which the cell assembly 10 of FIG. 2 is housed, wherein a base plate 70, a side wall 80, a main wall 90, and the like support the lower and side parts of the cell assembly 10, respectively. The pack case 60 in which the cell assemblies 10 in the form shown in FIG. 2 are housed has the advantage that the side wall 80 and the main wall 90 are coupled to each other to separate each cell assembly 10, and no separate separation wall or the like is required to compartmentalize the internal space. This is because the side beams provided on the side parts of the cell assemblies 10 can take over the function of a conventional separation wall.

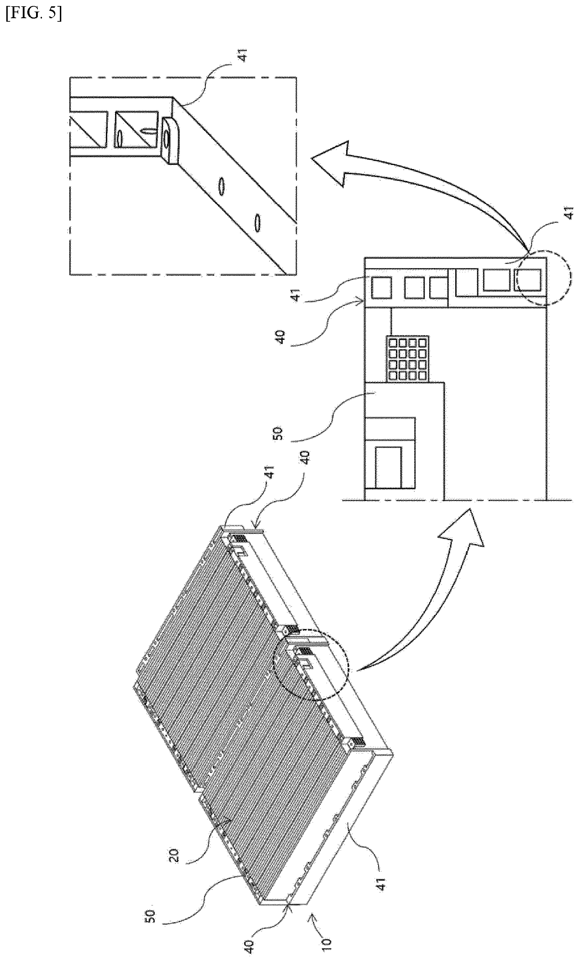

FIG. 5 is a bottom perspective view of a portion of a side beam 40 interposed between a pair of cell assemblies 10 coupled to each other.

The cell assemblies 10 in the form shown in FIG. 2 may be physically separated from each other within the pack case 60 by the presence of the side beams 40.

However, since the lower end of the side beam 40 is formed flat as shown in FIG. 5, a small gap may exist between the lower end of the side beam 40 and the flat base plate 70. Such a gap may serve as a passageway for the easy transfer of gases, flames, heat, etc. to other normal cell assemblies 10 in the event of thermal runaway of any one cell assembly 10.

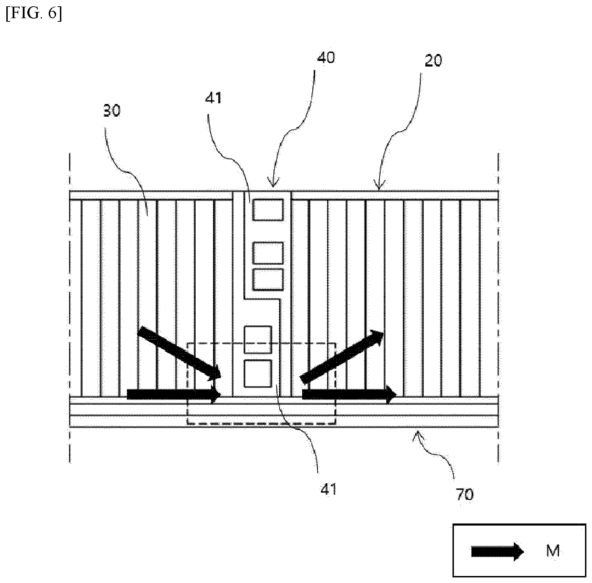

FIG. 6 is a partial cross-sectional view of the conventional pack case 60, wherein it can be seen that gases, flames, heat, and the like move between the pair of side beams coupled to each other and the base plate.

As discussed above, the cell assembly 10 in the form of FIG. 2 suffers from the problem that when housed within the pack case 60, high temperature gases, flames, heat, and the like can easily propagate through small gaps.

In the prior art, various solutions have been researched to solve the problem of gas, flame, and heat propagation in battery packs applied with a novel form of cell assembly 10 as shown in FIG. 2.

WO2021/256878 discloses a battery module comprising: a plurality of battery cells which stand up lengthwise in a vertical direction, have a pair of electrode terminals positioned on an upper portion thereof, and are arranged in at least one direction; a cooling frame having an upper surface on which a lower portion of the plurality of battery cells is fixed and extends in a horizontal direction; an adhesive interposed between the plurality of battery cells and the cooling frame; and an upper frame configured to cover the plurality of battery cells.

### [Description of the Invention]

### [Technical Problem]

Accordingly, an object of the present invention is to provide a battery pack capable of inhibiting the transfer of heat between internal spaces.

Other objects and advantages of the present invention will be understood from the following description, and will become more apparent from the embodiments of the present invention. It will also be readily apparent that the objects and advantages of the present invention may be realized by the means and combinations thereof disclosed in the patent claims.

### [Technical Solution]

According to the present invention, the present invention provides a cell assembly including: a cell block including a plurality of cells from which electrode leads are drawn out; a busbar frame coupled to the cell block and including a busbar electrically connected to an electrode lead of the cell block; and a pair of side beams coupled to the busbar frame to support both sides of the cell block, wherein at least one of the pair of side beams is coated with an insulating material at a lower end.

The side beam includes: a first side beam coupled to one end of the busbar frame to support one side surface of the cell block; and a second side beam coupled to the other end of the busbar frame to support the other side surface of the cell block, wherein the first side beam and the second side beam are shaped to engage with each other.

The side beam may include a protrusion part protruding to form a step along a height direction of the cell block.

The protrusion part may include: an upper protrusion part formed on an upper part of the first side beam; and a lower protrusion part formed on a lower part of the second side beam.

The first side beam and the second side beam may be shaped such that the upper protrusion part and the lower protrusion part are engaged with each other.

The second side beam includes at its lower end an insertion groove formed for insertion of the insulating material, wherein
the insulating material is coated to be filled into the insertion groove.

The insertion groove may extend along a longitudinal direction of the second side beam.

According to the present invention, the present invention provides a battery pack including: the above-mentioned cell assembly; and a pack case providing a space in which the cell assembly is seated, wherein a pair of cell assemblies disposed adjacent to each other are seated in the pack case such that a first side beam of any one cell assembly is coupled to a second side beam of the other cell assembly.

The first side beam and the second side beam may be coupled together to form a separation wall separating a pair of neighboring cell blocks.

An insulating material may be coated at the lower end of the separation wall.

The separation wall includes at its lower end an insertion groove formed for insertion of the insulating material, wherein
the insulating material may be coated to be filled into the insertion groove.

The pack case includes a base plate supporting a lower part of the cell assembly, wherein
the insulating material may seal between the separation wall and the base plate.

The separation wall may be screw-coupled to the base plate.

The pack case includes a screw-like coupling member for coupling the separation wall and the base plate to each other, wherein the coupling member may be screw-coupled to the base plate by vertically penetrating the separation wall and the insulating material coated on the lower end of the separation wall.

### [Advantageous Effects]

According to the battery pack in which the cell assembly of the present invention is housed, even if any one of the cell assemblies housed therein undergoes thermal runaway and generates high temperature gases and flames, the propagation of the gases and flames to other cell assemblies can be prevented.

### [Brief Description of the Drawings]

FIG. 1 illustrates an example of one of the prior art battery modules.
FIG. 2 illustrates a conventional cell assembly with side beams applied.
FIG. 3 illustrates the coupling of the cell assembly in the form of FIG. 2.
FIG. 4 illustrates a pack case of a battery pack in which the cell assembly of FIG. 2 is housed.
FIG. 5 is a bottom perspective view of a pair of cell assemblies coupled together inside the pack case of FIG. 4 and a portion of a side beam interposed between the cell assemblies.
FIG. 6 is a cross-sectional view of a portion of a pack case in which the cell assembly of FIG. 2 is housed.
FIG. 7 is a perspective and front view of a cell assembly of the present invention.
FIG. 8 is a bottom perspective view of a portion of a second side beam included in a cell assembly.
FIG. 9 is a perspective view of a battery pack according to a first embodiment of the present invention.
FIG. 10 illustrates a simplified side beam arrangement for a pair of cell assemblies disposed adjacent to each other inside a pack case.
FIG. 11 illustrates the coupling of a pair of neighboring cell assemblies.
FIG. 12 is a bottom perspective view of a portion of a separation wall included in a pair of cell assemblies coupled to each other.
FIG. 13 is a cross-sectional view of a limited area where the separation wall is located in the pack case of FIG. 9.
FIG. 14 is a cross-sectional view of a portion of the pack case of FIG. 9, and a simplified illustration of the movement of gas, flame, and heat.
FIG. 15 is a bottom perspective view of a portion of a second side beam included in a battery pack according to a second embodiment of the present invention.
FIG. 16 is a bottom perspective view of a portion of a separation wall included in a pair of cell assemblies coupled to each other.
FIG. 17 is a cross-sectional view of a portion of the pack case where the separation wall is located.
FIG. 18 is a cross-sectional view of a portion of the pack case, and a simplified illustration of the movement of gas, flame, and heat.
FIG. 19 is a schematic diagram illustrating another exemplary embodiment of a cell assembly of the present invention.
FIG. 20 is a schematic diagram illustrating yet another exemplary embodiment of a cell assembly of the present invention.
FIG. 21 is a schematic diagram illustrating yet another exemplary embodiment of a cell assembly of the present invention.

### [Best Mode for Carrying out the Invention]

Hereinafter, the preferred embodiments of the present invention will be described in detail with reference to the attached drawings. Prior to this, the terms and words used in this specification and claims should not be construed in a limited or merely dictionary sense, but should be interpreted according to the meaning and concept consistent with the technical spirit of the present invention, based on the principle that the inventor is entitled to define terms in a way that best describes his invention.

Therefore, it should be understood that the embodiments described in this specification and the configurations illustrated in the drawings are merely the most preferred embodiments of the present invention.

Furthermore, in describing the present invention, specific descriptions of relevant disclosed configurations or features are omitted where it is believed that such detailed description would obscure the essence of the present invention.

Since the embodiments of the present invention are provided to more fully illustrate the present invention to those of ordinary skill in the art, the shapes and sizes of the components in the drawings may be exaggerated, omitted, or shown schematically for clarity. Accordingly, the size or proportions of each component are not necessarily indicative of its actual size or proportions.

The present invention relates to a cell assembly and a battery pack including the same. More specifically, the invention provides a cell assembly including side beams coated with an insulating material at its lower end, and provides a battery pack utilizing the side beams of the cell assembly to inhibit the movement of heat in an internal space.

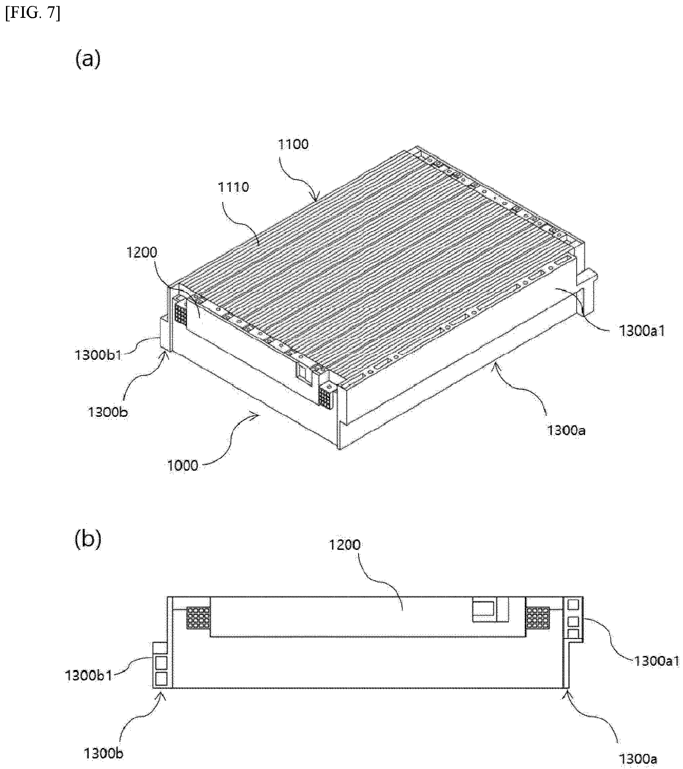

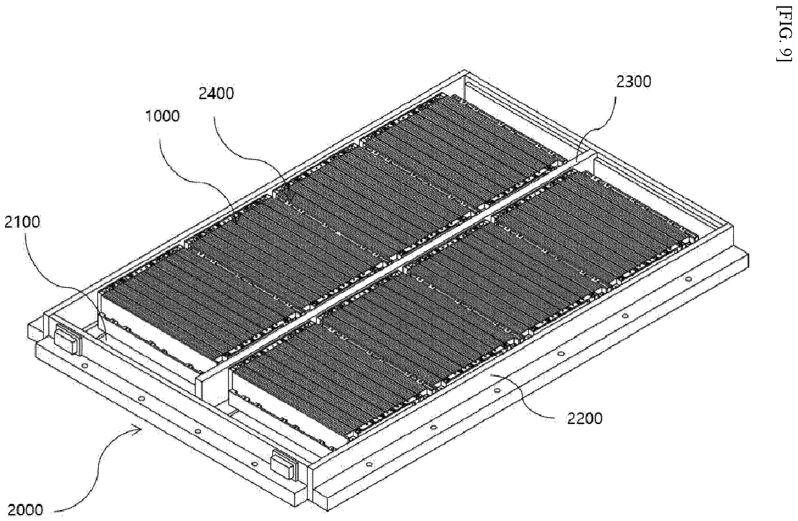

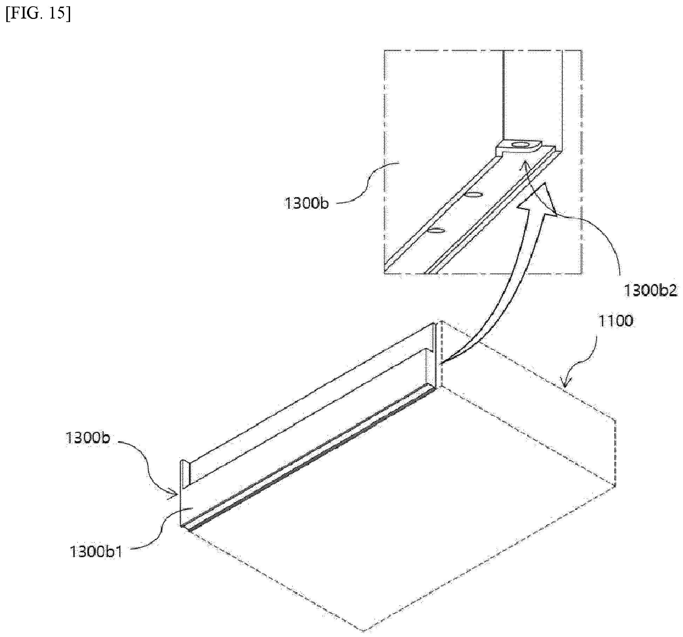

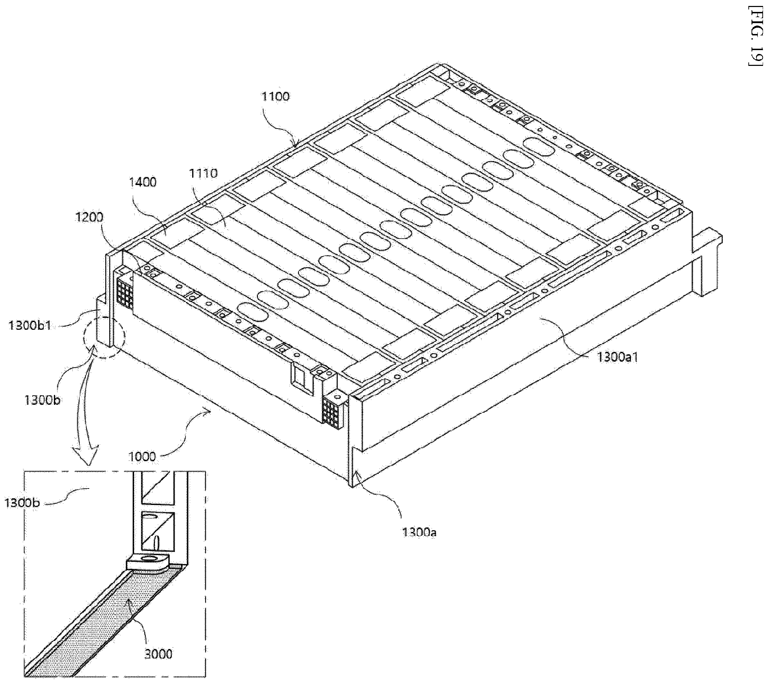

FIGS. 7 through 8 relate to a cell assembly of the present invention, FIGS. 9 through 14 relate to a battery pack according to a first embodiment of the present invention, FIGS. 15 through 18 relate to a battery pack according to a second embodiment of the present invention, and FIGS. 19 through 21 relate to other exemplary embodiments of the cell assembly of the present invention.

Hereinafter, the cell assembly and battery pack of the present invention will be described with reference to the accompanying drawings.

### Cell assembly 1000

The cell assembly 1000 of the present invention includes a cell block 1100, a busbar frame 1200 coupled to the cell block 1100, and a pair of side beams 1300 coupled to both sides of the cell block 1100, respectively.

The cell block 1100 includes a plurality of cells 1110.

The cell 1110 includes an electrode assembly (not shown) formed by alternating stacking of electrodes and separators, and a case (not shown) enclosing and sealing the electrode assembly.

The cell 1110 is categorized into pouch-type, prismatic, and cylindrical depending on the shape of the electrode assembly and the case.

The cell assembly 1000 may further include a module frame that wraps around the perimeter of the cell block 1100 such that each cell 1110 is protected from external impact. In this case, the module frame may be provided to support or protect only a portion of the cell block 1100, or may be provided on all exposed portions of the cell block 1100 to completely isolate the cell block 1100 from the outside.

FIG. 7 is a perspective and front view of a cell assembly 1000 of the present invention. More specifically, FIG. 7 illustrates a cell assembly 1000 having a pouch-type cell 1110 housed therein. (Hereinafter, for ease of understanding, FIGS. 7 through 18 will focus on the cell assembly 1000 and battery pack 2000 including the pouch-type cell 1110.)

The cell block 1100 includes a plurality of cells 1110 including electrode leads (not shown) as shown in FIG. 7. More specifically, the cell block 1100 includes a plurality of cells 1110 stacked unidirectionally.

The busbar frame 1200 includes a busbar (not shown) electrically connected to each electrode lead of the cell block 1100, and is coupled to the cell block 1100.
The side beam 1300 includes a first side beam 1300a coupled to one side of the cell block 1100 and a second side beam 1300b coupled to the other side of the cell block 1100, as shown in FIG. 7(b).

More specifically, the first side beam 1300a is coupled to one end of the busbar frame 1200 to support one side surface of the cell block 1100, and the second side beam 1300b is coupled to the other end of the busbar frame 1200 to support the other side surface of the cell block 1100.
The side beam 1300 includes a protrusion part that protrude to form a step along the height direction of the cell block 1100. Specifically, each of the pair of side beams 1300 includes a protrusion part on the other surface opposite one surface in contact with the cell block 1100.

In one of the pair of side beams 1300, the protrusion part is formed at the upper part and in the other, the protrusion part is formed at the lower part. That is, the first side beam 1300a and the second side beam 1300b are shaped to engage with each other due to the protrusion parts formed at the different locations.

The protrusion part includes an upper protrusion part 1300a1 formed on an upper part of the first side beam 1300a and a lower protrusion part 1300b1 formed on a lower part of the second side beam 1300b.

The first side beam 1300a and second side beam 1300b have a shape in which the upper protrusion part 1300a1 and lower protrusion part 1300b 1 are engaged with each other.

The cell assembly 1000 of the present invention is characterized in that it includes an insulating material 3000 at the lower end of the side beam 1300 of either of the pair of side beams 1300.

Preferably, the insulating material 3000 is included in the second side beam 1300b, which includes a lower end protrusion part.

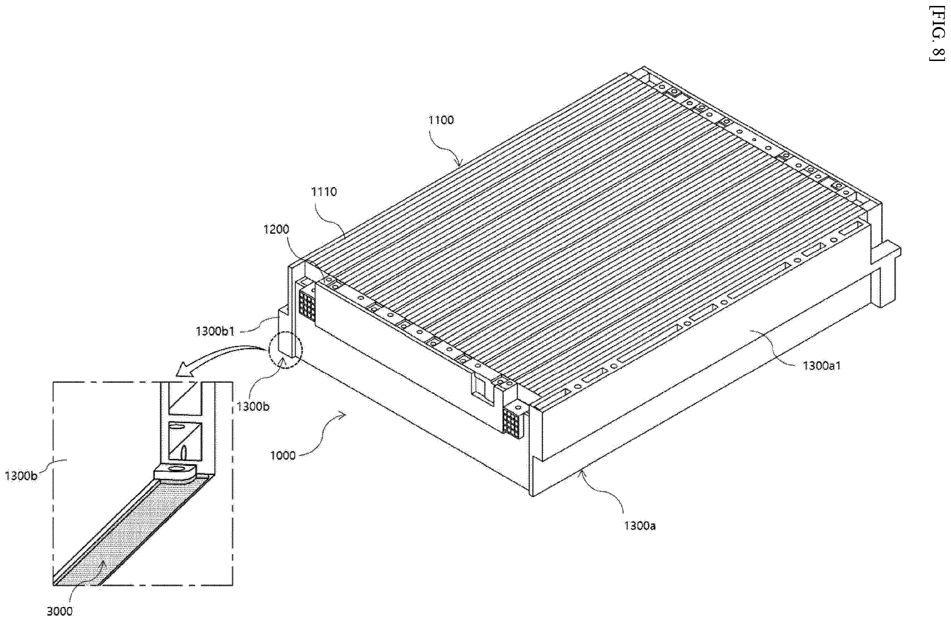

FIG. 8 is a bottom perspective view of a portion of a second side beam 1300b included in the cell assembly 1000.

The insulating material 3000 is coated on the lower end of the second side beam 1300b, as shown in FIG. 8.

The insulating material 3000 is formed extending along a longitudinal direction of the second side beam 1300b from the lower end of the second side beam 1300b.

The insulating material 3000 may include at least one type among organic and inorganic materials. For example, the insulating material 3000 can be cork, cotton, felt, carbide, rubber, asbestos, glass wool, quartz cotton, diatomaceous earth, magnesium carbonate powder, and the like. However, the type of insulating material 3000 is not limited to those listed above, and anything that has a low thermal conductivity or can effectively delay heat transfer can be used.

The insulating material 3000 may be attached to the lower end of the second side beam 1300b in solid form, or may be applied and coated in slurry form.

The cell assembly 1000 of the present invention includes a second side beam 1300b that includes an insertion groove 1300b2 at its lower end into which the insulating material 3000 is inserted for more stable attachment of the insulating material 3000.

The insertion groove 1300b2 will be described in more detail hereinafter with reference to a second embodiment of the battery pack, with reference to the drawings.

### Battery pack

The battery pack of the present invention is characterized in that it includes a cell assembly 1000 having a second side beam 1300b provided on one side that includes an insulating material 3000 at a portion of its lower end.

### (First embodiment)

FIG. 9 is a perspective view of a battery pack according to a first embodiment of the present invention.

The battery pack includes a pack case 2000 that provides a space in which the plurality of cell assemblies 1000 are seated, as shown in FIG. 9.

The pack case 2000 includes a base plate 2100 that supports a lower part of the cell assembly 1000, a side wall 2200 coupled along a border of the base plate 2100 to support a side part of each cell assembly 1000, and a main wall 2300 that crosses the center of the pack case 2000 and is coupled to the base plate 2100.

The main wall 2300 is formed to extend along the longitudinal direction of the pack case 2000 and is coupled the base plate 2100 so as to divide the internal space of the pack case 2000 into two large compartments.

The plurality of cell assemblies 1000 is disposed on both sides of the main wall 2300 and is seated on the base plate 2100. Each cell assembly 1000 is disposed such that the side beams 1300 provided on the side parts are engaged and coupled to each other.

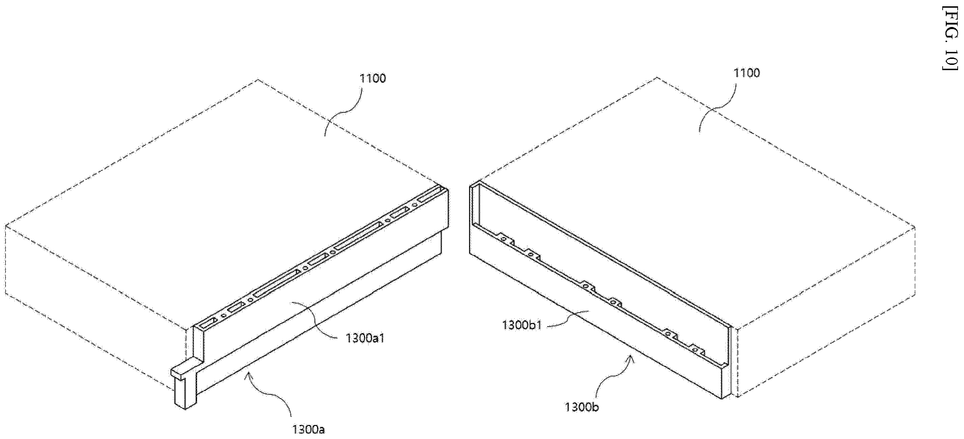

FIG. 10 is a simplified illustration of the arrangement of side beams 1300 of a pair of cell assemblies 1000 disposed adjacent to each other inside a pack case 2000.

A pair of neighboring cell assemblies 1000 is shaped such that a first side beam 1300a of one cell assembly 1000 and a second side beam 1300b of the other cell assembly 1000 engage each other, as shown in FIG. 10. Specifically, an upper protrusion part 1300a1 of the first side beam 1300a provided on one side of the one cell assembly 1000 fits into the upper part of a lower protrusion part 1300b1 of the second side beam 1300b provided on one side of the other cell assembly 1000. Thus, the first side beam 1300a and the second side beam 1300b facing each other may be coupled such that the upper protrusion part 1300a1 and the lower protrusion part 1300b1 are engaged and coupled to each other.

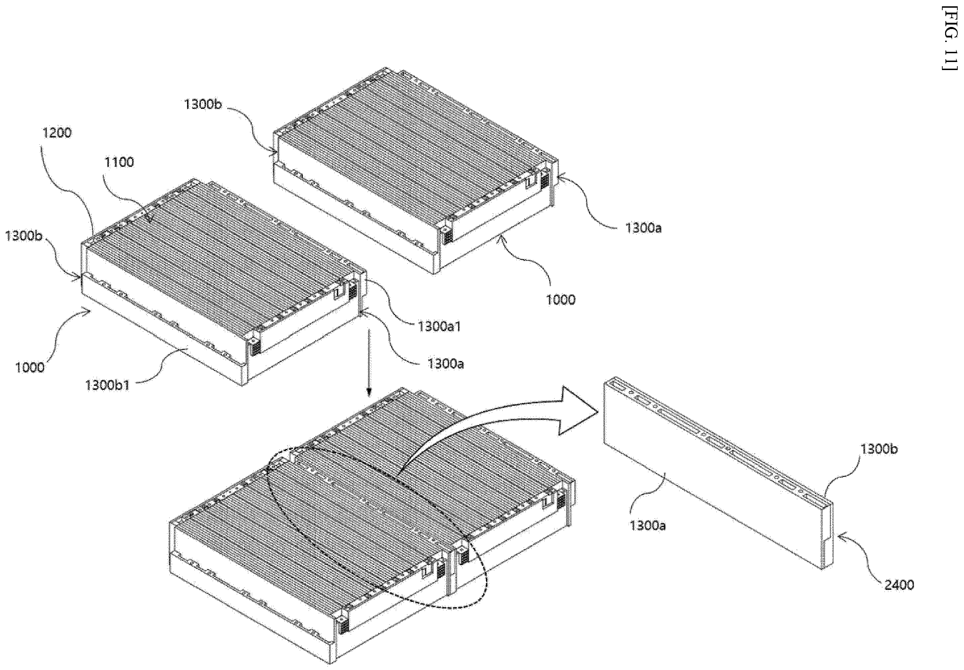

FIG. 11 illustrates the coupling of a pair of neighboring cell assemblies 1000.
The first side beam 1300a and the second side beam 1300b provided in each of the cell assemblies 1000 are coupled together to form a single separation wall 2400, as shown in FIG. 11.

The separation wall 2400 formed by the coupling of the pair of side beams 1300 may serve to separate a pair of neighboring cell blocks 1100 from each other in the internal space of the pack case 2000, and may also serve to support the side parts of each cell block 1100.

The separation wall 2400 serves to block gases, flames, and heat generated in each cell assembly 1000 from being transferred to other cell assemblies 1000.

One separation wall 2400 formed by the coupling of the side beams 1300 includes an insulating material 3000 at its lower end.

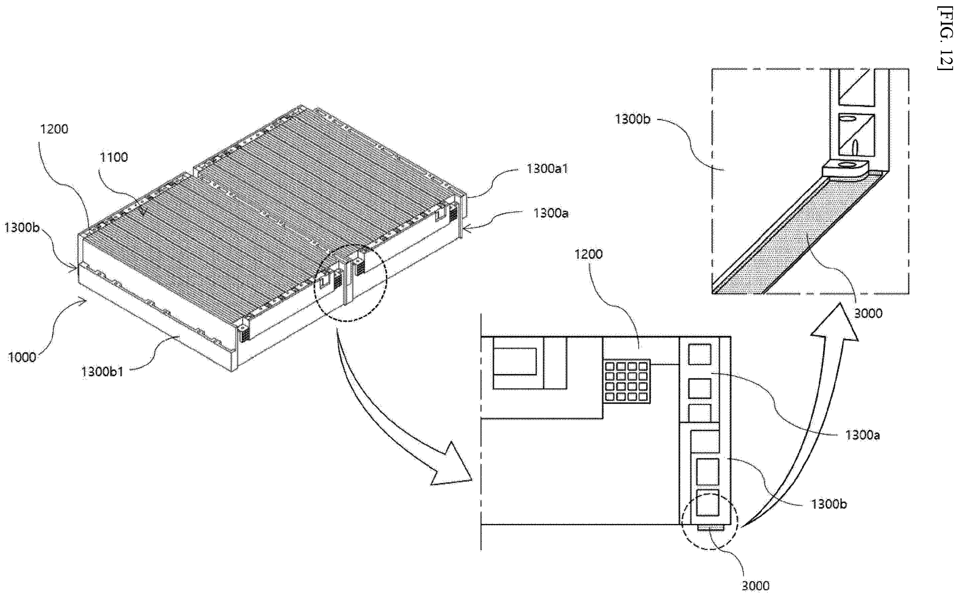

FIG. 12 is a bottom perspective view of a portion of a separation wall 2400 included in a pair of cell assemblies 1000 coupled to each other.

The separation wall 2400 is formed by the coupling of the first side beam 1300a and the second side beam 1300b, which includes insulating material 3000 at its lower end.

The insulating material 3000 is specifically included at the lower end of the lower protrusion part 1300b1 of the second side beam 1300b. Since the lower part of the separation wall 2400 is mostly occupied by the lower protrusion part 1300b1 of the second side beam 1300b, the lower end of the separation wall 2400 is mostly occupied by the insulating material 3000 included at the lower end of the second side beam 1300b.

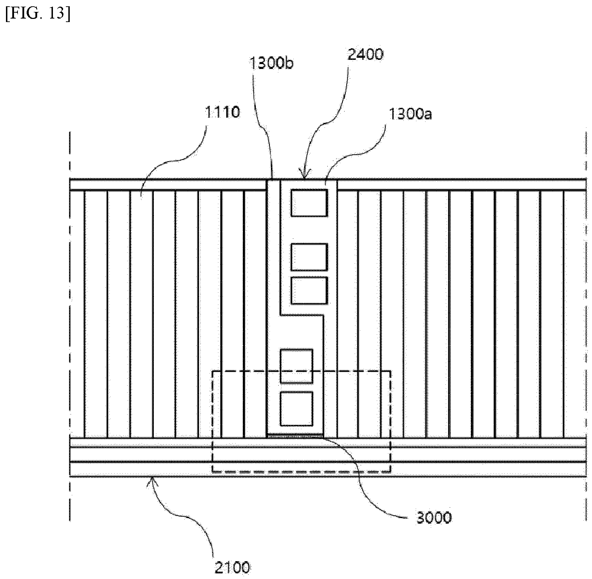

FIG. 13 is a cross-sectional view of a limited area of the pack case 2000 of FIG. 9 where the separation wall 2400 is located.

Referring to FIG. 13, a separation wall 2400 formed by the coupling of the first side beam 1300a and the second side beam 1300b is interposed between a pair of neighboring cell blocks 1100. Further, an insulating material 3000 is interposed between the separation wall 2400 and the base plate 2100 supporting the lower part of the cell assembly 1000.

As described above, the insulating material 3000 effectively isolates the internal space of the pack case 2000 in which each cell assembly 1000 is located by sealing any gaps that may form between the separation wall 2400 and the base plate 2100.

The battery pack of the present invention is characterized in that when any one of the cell assemblies 1000 housed therein undergoes thermal runaway and discharges high temperature gases, flames, and heat, the gases, flames, and heat are blocked by a separation wall 2400 and an insulating material 3000 provided at the lower end of the separation wall 2400 to protect other normal cell assemblies 1000.

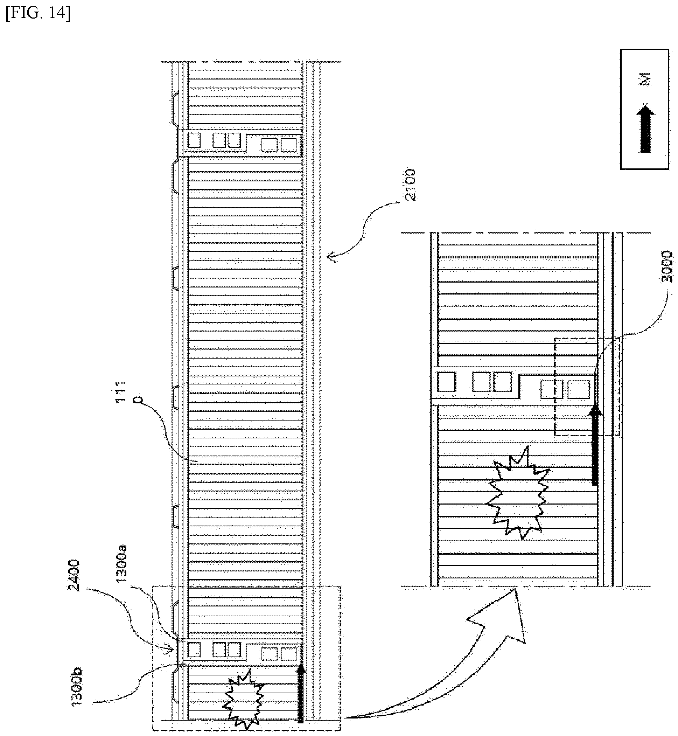

FIG. 14 is a cross-sectional view of a portion of the pack case 2000 of FIG. 9, and a simplified illustration of the movement of gas, flame, and heat.

Referring to FIG. 14, gases, flames, and heat from the cell assembly 1000 that has undergone thermal runaway are blocked by the insulating material 3000 interposed between the separation wall 2400 and the base plate 2100 and are unable to move to other spaces.

The cell assembly 1000 of the present invention may be fixed by being screw-coupled to the internal space of the pack case 2000 by means of a coupling member such as bolts, and the like. Specifically, the separation wall 2400 is screw-coupled to the base plate 2100.

The pack case 2000 may further include a screw-like coupling member (not shown) for coupling the separation wall 2400 and the base plate 2100 to each other, the coupling member may be screw-coupled to the base plate 2100 by vertically penetrating the separation wall 2400 and the insulating material 3000 coated on the lower end of the separation wall 2400. In this case, the coupling member is screw-coupled to the base plate 2100 by vertically penetrating the separation wall 2400 and the insulating material 3000 coated on the lower end of the separation wall 2400, so that the insulating material 3000 may also be stably fixed to the separation wall 2400 and base plate 2100 by the coupling member.

The coupling member is screw-coupled to the base plate 2100 by simultaneously penetrating the upper protrusion part 1300a1 of the first side beam 1300a and the lower protrusion part 1300b 1 of the second side beam 1300b, so that the first side beam 1300a and the second side beam 1300b may also be coupled and fixed to each other by the coupling member.

### (Second embodiment)

The battery pack of the present invention also forms a groove at the lower end of the separation wall 2400 to more securely attach the insulating material 3000 used to keep out gases, flames, and heat, etc.

FIG. 15 is a bottom perspective view of a portion of a second side beam 1300b included in a battery pack according to a second embodiment of the present invention.
The second side beam 1300b includes at its lower end an insertion groove 1300b2 formed for insertion of the insulating material 3000, as shown in FIG. 15.

The insertion groove 1300b2 may be formed extending along a longitudinal direction of the second side beam 1300b.

The insulating material 3000 may be inserted into the insertion groove 1300b2 and attached, or is coated.

The insulating material 3000 is filled throughout the insertion groove 1300b2 formed extending along the longitudinal direction of the second side beam 1300b.

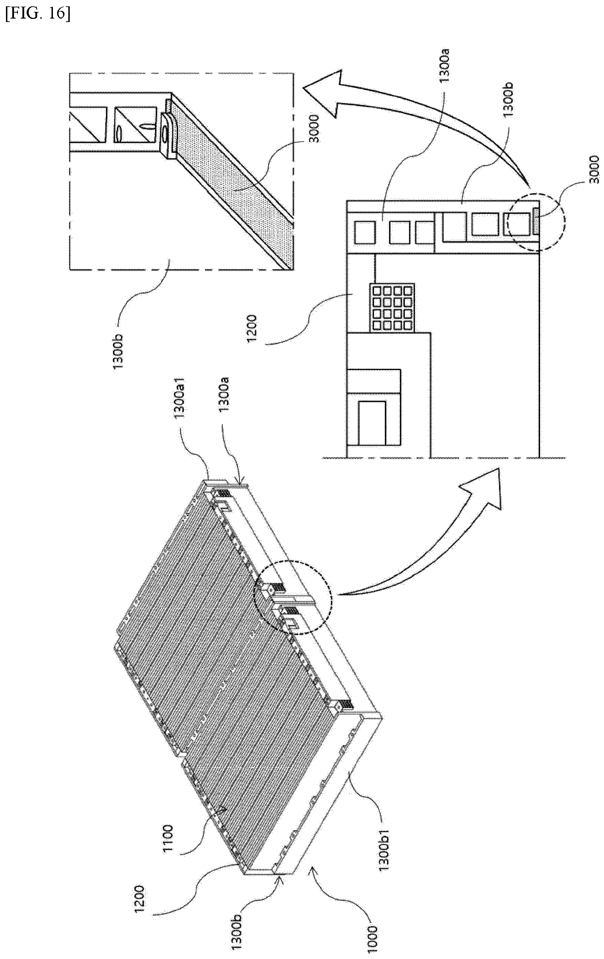

FIG. 16 is a bottom perspective view of a portion of a separation wall 2400 included in a pair of cell assemblies 1000 coupled to each other.

Referring to FIG. 16, the insertion groove 1300b2 formed at the lower end of the separation wall 2400 is filled with an insulating material 3000.

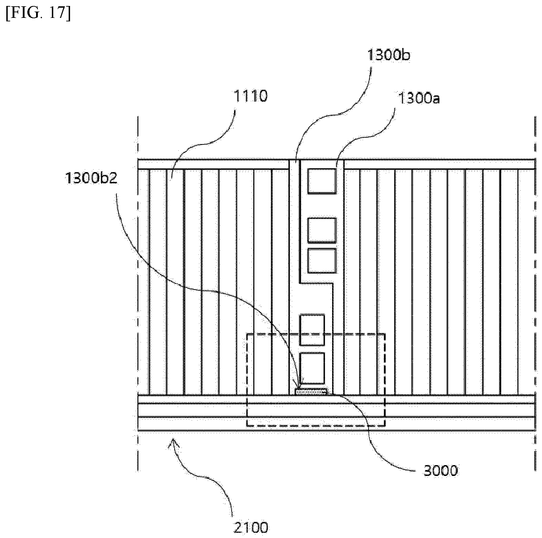

FIG. 17 is a cross-sectional view of a portion of the pack case 2000 where the separation wall 2400 is located.

Referring to FIGS. 16 and 17, the insulating material 3000 may be minimally exposed to the outside while inserted in the insertion groove 1300b2, and side support may be enhanced by the insertion groove 1300b2.

Specifically, the insulating material 3000 filled in the insertion groove 1300b2 extending along the longitudinal direction of the separation wall 2400 is not pushed or pulled out in the horizontal direction by the side support force of the insertion groove 1300b2, and can be stably interposed and positioned between the separation wall 2400 and the base plate 2100.

The insulating material 3000 filled in the insertion groove 1300b2 can effectively block gases, flames, and heat that attempt to migrate through the gap between the separation wall 2400 and the base plate 2100.

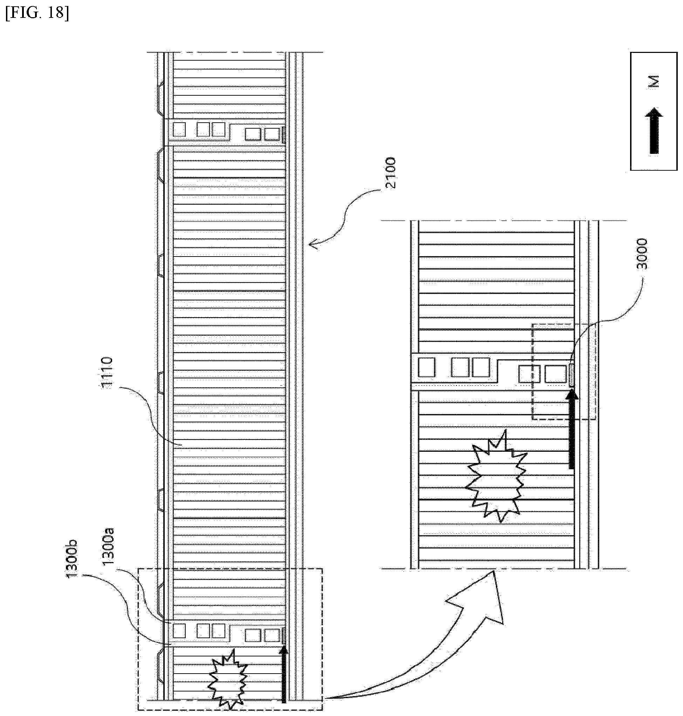

FIG. 18 is a cross-section view of a portion of the pack case 2000, and a simplified illustration of the movement of gas, flame, and heat.

Referring to FIG. 18, gases, flames, and heat from the cell assembly 1000 that has undergone thermal runaway are trapped between the separation wall 2400 and the base plate 2100 by the insulating material 3000 inserted in the insertion groove 1300b2 and are prevented from migrating to other spaces.

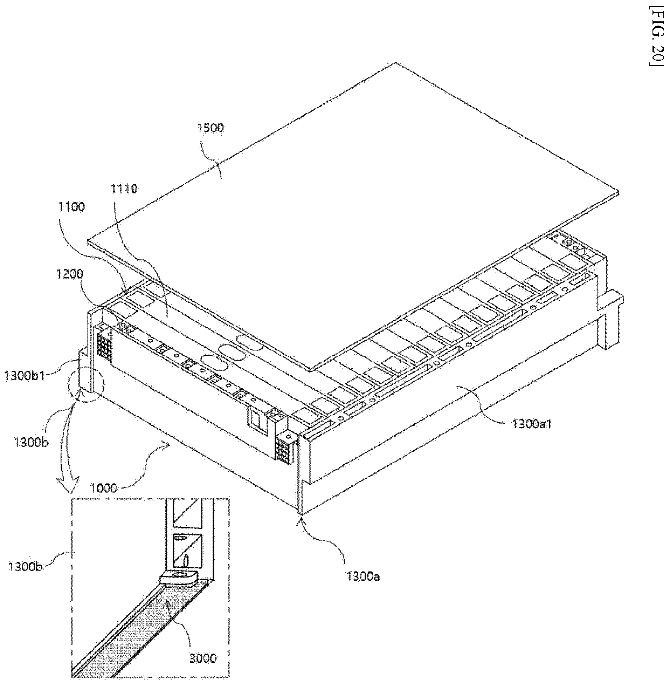

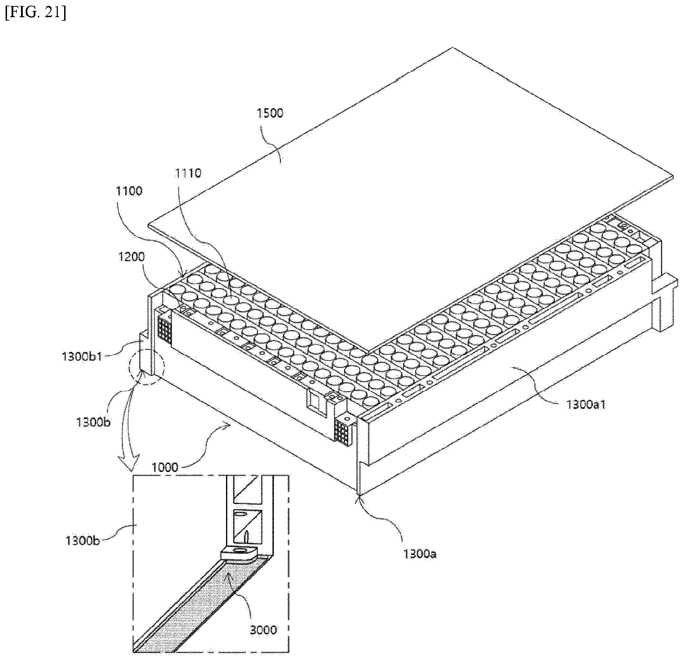

FIGS. 19 through 21 illustrate different forms of cell assemblies of the present invention, respectively. Specifically, FIGS. 19 and 20 are perspective views of a cell assembly 1000 including prismatic cells 1110, and FIG. 21 is a perspective view of a cell assembly 1000 including cylindrical cells 1110.

Referring to FIG. 19, the cell block 1100 includes prismatic cells 1110 with electrode leads formed at the upper part.

The cell block 1100 may further include a connection member 1400 that electrically connects the electrode leads of adjacent cells 1110.

The busbar frame 1200 includes a busbar (not shown) electrically connected to each electrode lead or connection member 1400 of the cell block 1100, and is coupled to the cell block 1100.

The side beam 1300 includes a first side beam 1300a coupled to one side of the cell block 1100 and a second side beam 1300b coupled to the other side of the cell block 1100, as shown in FIG. 19. The side beam 1300 includes a protrusion part that protrudes to form a step along a height direction of the cell block 1100. Specifically, each of the pair of side beams 1300 includes a protrusion part on the other surface opposite one surface in contact with the cell block 1100.

The protrusion part includes an upper protrusion part 1300a1 formed on an upper part of the first side beam 1300a and a lower protrusion part 1300b1 formed on a lower part of the second side beam 1300b.

The cell assembly 1000 of the present invention is characterized in that it includes an insulating material 3000 at the lower end of the side beam 1300 of either of the pair of side beams 1300.

Preferably, the insulating material 3000 is included in the second side beam 1300b, which includes a lower end protrusion part.

Referring to FIG. 20, the cell block 1100 includes prismatic cells 1110 with electrode leads formed on the upper part.

The cell block 1100 may further include a module frame 1500 that includes connection terminals (not shown) for electrically connecting the electrode leads of each cell 1110.

The module frame 1500 is coupled at the upper part of the cell block 1100 as shown in FIG. 20, and by the coupling, connection terminals included in the module frame 1500 electrically connect the electrode leads of each cell 1110.

The busbar frame 1200 includes a busbar (not shown) electrically connected to connection terminals of the upper frame 1500, and is coupled to the cell block 1100.

The side beam 1300 includes a first side beam 1300a coupled to one side of the cell block 1100 and a second side beam 1300b coupled to the other side of the cell block 1100, as shown in FIG. 20. The side beam 1300 includes a protrusion part that protrudes to form a step along a height direction of the cell block 1100. Specifically, each of the pair of side beams 1300 includes a protrusion part on the other surface opposite one surface in contact with the cell block 1100.

The protrusion part includes an upper protrusion part 1300a1 formed on an upper part of the first side beam 1300a and a lower protrusion part 1300b1 formed on a lower part of the second side beam 1300b.

The cell assembly 1000 of the present invention is characterized in that it includes an insulating material 3000 at the lower end of the side beam 1300 of either of the pair of side beams 1300.

Preferably, the insulating material 3000 is included in the second side beam 1300b, which includes a lower end protrusion part.

Referring to FIG. 21, the cell block 1100 includes cylindrical cells 1110 that include electrode leads at the upper part.

The cell block 1100 may further include a pair of module frames 1500 including connection terminals (not shown) capable of electrically connecting the electrode leads of each cell 1110.

The module frame 1500 is coupled at the upper and lower parts of the cell block 1100, respectively, and by the coupling, connection terminals included in the module frame 1500 electrically connect the electrode leads of each cell 1110.

The busbar frame 1200 includes a busbar (not shown) electrically connected to connection terminals of the module frame 1500, and is coupled to the cell block 1100.

The side beam 1300 includes a first side beam 1300a coupled to one side of the cell block 1100 and a second side beam 1300b coupled to the other side of the cell block 1100, as shown in FIG. 21. The side beam 1300 includes a protrusion part that protrudes to form a step along a height direction of the cell block 1100. Specifically, each of the pair of side beams 1300 includes a protrusion part on the other surface opposite one surface in contact with the cell block 1100.

The protrusion part includes an upper protrusion part 1300a1 formed on an upper part of the first side beam 1300a and a lower protrusion part 1300b1 formed on a lower part of the second side beam 1300b.

The cell assembly 1000 of the present invention is characterized in that it includes an insulating material 3000 at the lower end of the side beam 1300 of either of the pair of side beams 1300.

Preferably, the insulating material 3000 is included in the second side beam 1300b, which includes a lower end protrusion part.

The present invention has been described in more detail above with reference to the drawings and embodiments. However, it is to be understood that the configurations shown in the drawings or embodiments described herein are only one embodiment of the invention.

### [Reference numerals]

10: (CONVENTIONAL ART) CELL ASSEMBLY
20: (CONVENTIONAL ART) CELL BLOCK
30: (CONVENTIONAL ART) CELL
40: (CONVENTIONAL ART) SIDE BEAM
41: (CONVENTIONAL ART) PROTRUSION PART
50: (CONVENTIONAL ART) BUSBAR FRAME
60: (CONVENTIONAL ART) PACK CASE
70: (CONVENTIONAL ART) BASE PLATE
80: (CONVENTIONAL ART) SIDE WALL
90: (CONVENTIONAL ART) MAIN WALL
1000: CELL ASSEMBLY
1100: CELL BLOCK
1110: CELL
1200: BUSBAR FRAME
1300: SIDE BEAM
1300a: FIRST SIDE BEAM
1300a1: UPPER PROTRUSION PART
1300b: SECOND SIDE BEAM
1300b 1: LOWER PROTRUSION PART
1300b2: INSERTION GROOVE
1400: CONNECTION MEMBER
1500: UPPER FRAME
2000: PACK CASE
2100: BASE PLATE
2200: SIDE WALL
2300: MAIN WALL
2400: SEPARATION WALL
3000: INSULATING MATERIAL
M: GAS, FLAME, AND HEAT TRANSFER

## Claims

1. A cell assembly (1000) comprising:
a cell block (1100) including a plurality of cells (1110) from which electrode leads are drawn out;
a busbar frame (1200) coupled to the cell block (1100) and including a busbar electrically connected to an electrode lead of the cell block (1100); and
a pair of side beams (1300) coupled to the busbar frame (1200) to support both sides of the cell block (1100), wherein
the side beam (1300) comprises:
a first side beam (1300a) coupled to one end of the busbar frame (1200) to support one side surface of the cell block (1100); and
a second side beam (1300b) coupled to the other end of the busbar frame (1200) to support the other side surface of the cell block (1100), wherein
the first side beam (1300a) and the second side beam (1300b) are shaped to engage with each other,
**characterized in that**
at least one of the pair of side beams (1300) is coated with an insulating material (3000) at a lower end, wherein
the second side beam (1300b) includes at its lower end an insertion groove (1300b2) formed for insertion of the insulating material (3000), wherein
the insulating material (3000) is coated to be filled into the insertion groove (1300b2).

2. The cell assembly (1100) of claim 1, wherein
the side beam (1300) includes a protrusion part protruding to form a step along a height direction of the cell block (1100).

3. The cell assembly (1100) of claim 2, wherein
the protrusion part comprises: an upper protrusion part (1300a1) formed on an upper part of the first side beam (1300a); and a lower protrusion part (1300b1) formed on a lower part of the second side beam (1300b).

4. The cell assembly (1100) of claim 3, wherein
the first side beam (1300a) and the second side beam (1300b) are shaped such that the upper protrusion part (1300a1) and the lower protrusion part (1300b1) are engaged with each other.

5. The cell assembly (1100) of claim 1, wherein
the insertion groove (1300b2) extends along a longitudinal direction of the second side beam (1300b).

6. A battery pack comprising:
the cell assembly (1000) of claim 1; and
a pack case (2000) providing a space in which the cell assembly (1000) is seated, wherein
a pair of cell assemblies (1000) disposed adjacent to each other are seated in the pack case (2000) such that a first side beam (1300a) of any one cell assembly (1000) is coupled to a second side beam (1300b) of the other cell assembly (1000).

7. The battery pack of claim 6, wherein
the first side beam (1300a) and the second side beam (1300b) are coupled together to form a separation wall (2400) separating a pair of neighboring cell blocks (1100).

8. The battery pack of claim 7, wherein
an insulating material (3000) is coated at the lower end of the separation wall (2400).

9. The battery pack of claim 7, wherein
the separation wall (2400) includes at its lower end an insertion groove (1300b2) formed for insertion of the insulating material, wherein
the insulating material (3000) is coated to be filled into the insertion groove (1300b2).

10. The battery pack of claim 7, wherein
the pack case (2000) includes a base plate (2100) supporting a lower part of the cell assembly (1000), wherein
the insulating material (3000) seals between the separation wall (2400) and the base plate (2100).

11. The battery pack of claim 7, wherein
the separation wall (2400) is screw-coupled to the base plate (2100).

12. The battery pack of claim 11, wherein
the pack case (2000) includes a screw-like coupling member for coupling the separation wall (2400) and the base plate (2100) to each other, wherein
the coupling member is screw-coupled to the base plate (2100) by vertically penetrating the separation wall (2400) and the insulating material (3000) coated on the lower end of the separation wall (2400).

## Patentansprüche

1. Zellenanordnung (1000), umfassend:
einen Zellenblock (1100), der eine Vielzahl von Zellen (1110) enthält, aus denen Elektrodenableitungen herausgeführt sind;
einen Sammelschienenrahmen (1200), der mit dem Zellenblock (1100) gekoppelt ist und eine Sammelschiene enthält, die elektrisch mit einer Elektrodenableitung des Zellenblocks (1100) verbunden ist; und
ein Paar Seitenträger (1300), die mit dem Sammelschienenrahmen (1200) gekoppelt sind, um beide Seiten des Zellenblocks (1100) zu stützen, wobei
der Seitenträger (1300) umfasst:
einen ersten Seitenträger (1300a), der mit einem Ende des Sammelschienenrahmens (1200) gekoppelt ist, um eine Seitenfläche des Zellenblocks (1100) zu stützen; und
einen zweiten Seitenträger (1300b), der mit dem anderen Ende des Sammelschienenrahmens (1200) gekoppelt ist, um die andere Seitenfläche des Zellenblocks (1100) zu stützen, wobei
der erste Seitenträger (1300a) und der zweite Seitenträger (1300b) so geformt sind, dass sie miteinander in Eingriff stehen,
**dadurch gekennzeichnet, dass**
mindestens einer des Paars von Seitenträgern (1300) an einem unteren Ende mit einem Isoliermaterial (3000) beschichtet ist, wobei
der zweite Seitenträger (1300b) an seinem unteren Ende eine Einführungsnut (1300b2) aufweist, die zum Einführen des Isoliermaterials (3000) ausgebildet ist, wobei
das Isoliermaterial (3000) so aufgetragen ist, dass es in die Einführungsnut (1300b2) gefüllt wird.

2. Zellenanordnung (1100) nach Anspruch 1, wobei
der Seitenträger (1300) einen Vorsprungsteil aufweist, der vorsteht, um eine Stufe entlang einer Höhenrichtung des Zellenblocks (1100) zu bilden.

3. Zellenanordnung (1100) nach Anspruch 2, wobei
der Vorsprungsteil umfasst: einen oberen Vorsprungsteil (1300a1), der an einem oberen Teil des ersten Seitenträgers (1300a) ausgebildet ist; und einen unteren Vorsprungsteil (1300b1), der an einem unteren Teil des zweiten Seitenträgers (1300b) ausgebildet ist.

4. Zellenanordnung (1100) nach Anspruch 3, wobei
der erste Seitenträger (1300a) und der zweite Seitenträger (1300b) so geformt sind, dass der obere Vorsprungsteil (1300a1) und der untere Vorsprungsteil (1300b1) miteinander in Eingriff stehen.

5. Zellenanordnung (1100) nach Anspruch 1, wobei
sich die Einführungsnut (1300b2) entlang einer Längsrichtung des zweiten Seitenträgers (1300b) erstreckt.

6. Batteriepack, umfassend:
die Zellenanordnung (1000) nach Anspruch 1; und
ein Packgehäuse (2000), das einen Raum bereitstellt, in dem die Zellenanordnung (1000) sitzt,
wobei
ein Paar von Zellenanordnungen (1000), die benachbart zueinander angeordnet sind, in dem Packgehäuse (2000) so sitzen, dass ein erster Seitenträger (1300a) einer beliebigen Zellenanordnung (1000) mit einem zweiten Seitenträger (1300b) der anderen Zellenanordnung (1000) gekoppelt ist.

7. Batteriepack nach Anspruch 6, wobei
der erste Seitenträger (1300a) und der zweite Seitenträger (1300b) miteinander gekoppelt sind, um eine Trennwand (2400) zu bilden, die ein Paar benachbarter Zellenblöcke (1100) trennt.

8. Batteriepack nach Anspruch 7, wobei
ein Isoliermaterial (3000) am unteren Ende der Trennwand (2400) aufgetragen ist.

9. Batteriepack nach Anspruch 7, wobei
die Trennwand (2400) an ihrem unteren Ende eine Einführungsnut (1300b2) aufweist, die zum Einführen des Isoliermaterials ausgebildet ist, wobei
das Isoliermaterial (3000) so aufgetragen ist, dass es in die Einführungsnut (1300b2) gefüllt wird.

10. Batteriepack nach Anspruch 7, wobei
das Packgehäuse (2000) eine Grundplatte (2100) aufweist, die einen unteren Teil der Zellenanordnung (1000) stützt, wobei
das Isoliermaterial (3000) zwischen der Trennwand (2400) und der Grundplatte (2100) abdichtet.

11. Batteriepack nach Anspruch 7, wobei
die Trennwand (2400) mit der Grundplatte (2100) schraubgekoppelt ist.

12. Batteriepack nach Anspruch 11, wobei
das Packgehäuse (2000) ein schraubenartiges Kopplungselement zum Koppeln der Trennwand (2400) und der Grundplatte (2100) miteinander aufweist, wobei
das Kopplungselement mit der Grundplatte (2100) schraubgekoppelt ist, indem es die Trennwand (2400) und das auf das untere Ende der Trennwand (2400) aufgetragene Isoliermaterial (3000) vertikal durchdringt.

## Revendications

1. Assemblage de cellules (1000) comprenant :
un bloc de cellules (1100) incluant une pluralité de cellules (1110) d'où partent des conducteurs d'électrode;
un cadre de barres omnibus (1200) couplé au bloc de cellules (1100) et incluant une barre omnibus connectée électriquement à un fil d'électrode du bloc de cellules (1100) ; et
une paire de poutres latérales (1300) couplées au cadre de barres omnibus (1200) pour supporter les deux côtés du bloc de cellules (1100), dans lequel
la poutre latérale (1300) comprend :
une première poutre latérale (1300a) couplée à une extrémité du cadre de barres omnibus (1200) pour supporter une surface latérale du bloc de cellules (1100); et
une seconde poutre latérale (1300b) couplée à l'autre extrémité du cadre de barres omnibus (1200) pour supporter l'autre surface latérale du bloc de cellules (1100), dans lequel
la première poutre latérale (1300a) et la seconde poutre latérale (1300b) sont conformées pour coopérer l'une avec l'autre,
**caractérisé en ce que**
au moins l'une de la paire de poutres latérales (1300) est revêtue d'un matériau isolant (3000) à une extrémité inférieure, dans lequel
la seconde poutre latérale (1300b) inclut à son extrémité inférieure une rainure d'insertion (1300b2) formée pour l'insertion du matériau isolant (3000), dans lequel
le matériau isolant (3000) est enduit pour être introduit dans la rainure d'insertion (1300b2).

2. Assemblage de cellules (1100) selon la revendication 1, dans lequel
la poutre latérale (1300) inclut une partie en saillie faisant saillie pour former une marche le long d'une direction de hauteur du bloc de cellules (1100).

3. Assemblage de cellules (1100) selon la revendication 2, dans lequel
la partie en saillie comprend : une partie en saillie supérieure (1300a1) formée sur une partie supérieure de la première poutre latérale (1300a) ; et une partie en saillie inférieure (1300b1) formée sur une partie inférieure de la seconde poutre latérale (1300b).

4. Assemblage de cellules (1100) selon la revendication 3, dans lequel
la première poutre latérale (1300a) et la seconde poutre latérale (1300b) sont conformées de telle sorte que la partie en saillie supérieure (1300a1) et la partie en saillie inférieure (1300b1) coopèrent l'une avec l'autre.

5. Assemblage de cellules (1100) selon la revendication 1, dans lequel
la rainure d'insertion (1300b2) s'étend le long d'une direction longitudinale de la seconde poutre latérale (1300b).

6. Bloc-batterie comprenant :
l'assemblage de cellules (1000) selon la revendication 1 ; et
un boîtier de bloc (2000) fournissant un espace dans lequel l'assemblage de cellules (1000) est logé,
dans lequel
une paire d'assemblages de cellules (1000) disposées de manière adjacente l'une et l'autre sont logées dans le boîtier de bloc (2000) de telle sorte qu'une première poutre latérale (1300a) de l'un quelconque des assemblages de cellules (1000) est couplée à une seconde poutre latérale (1300b) de l'autre assemblage de cellules (1000).

7. Bloc-batterie selon la revendication 6, dans lequel
la première poutre latérale (1300a) et la seconde poutre latérale (1300b) sont couplées ensemble pour former une paroi de séparation (2400) séparant une paire de blocs de cellules (1100) voisins.

8. Bloc-batterie selon la revendication 7, dans lequel
un matériau isolant (3000) est enduit à l'extrémité inférieure de la paroi de séparation (2400).

9. Bloc-batterie selon la revendication 7, dans lequel
la paroi de séparation (2400) inclut à son extrémité inférieure une rainure d'insertion (1300b2) formée pour l'insertion du matériau isolant, dans lequel
le matériau isolant (3000) est appliqué par revêtement pour être rempli dans la rainure d'insertion (1300b2).

10. Bloc-batterie selon la revendication 7, dans lequel
le boîtier de bloc (2000) inclut une plaque de base (2100) supportant une partie inférieure de l'assemblage de cellules (1000), dans lequel
le matériau isolant (3000) assure l'étanchéité entre la paroi de séparation (2400) et la plaque de base (2100).

11. Bloc-batterie selon la revendication 7, dans lequel
la paroi de séparation (2400) est couplée par vissage à la plaque de base (2100).

12. Bloc-batterie selon la revendication 11, dans lequel
le boîtier de bloc (2000) inclut un élément de couplage de type vis pour coupler la paroi de séparation (2400) et la plaque de base (2100) l'une à l'autre, dans lequel
l'élément de couplage est couplé par vissage à la plaque de base (2100) en pénétrant verticalement la paroi de séparation (2400) et le matériau isolant (3000) enduit sur l'extrémité inférieure de la paroi de séparation (2400).
